# EUROPEAN PATENT APPLICATION

(11) **EP 4 219 220 A1**
(43) Date of publication of application: **02.08.2023**
(21) Application number: 21870957.4
(22) Date of filing: 12.07.2021
(51) Int. Cl.: B60L 50/15, B60L 50/40, B60L 50/61, B60L 50/10, B60L 58/10

(54) **TRAIN TRACTION CUTTING AND CONTROL SYSTEM AND METHOD IN THE CASE OF EMERGENCY BRAKING**

(30) Priority: 24.09.2020 CN 202011017339
(71) Applicant: CRRC Zhuzhou Locomotive Co., Ltd., Zhuzhou, Hunan 412001 (CN)
(72) Inventor: KANG, Mingming, Zhuzhou, Hunan 412001 (CN); CHEN, Kui, Zhuzhou, Hunan 412001 (CN); XING, Tao, Zhuzhou, Hunan 412001 (CN); LI, Shun, Zhuzhou, Hunan 412001 (CN); QIN, Qingmin, Zhuzhou, Hunan 412001 (CN); LI, Xianling, Zhuzhou, Hunan 412001 (CN); FU, Jin, Zhuzhou, Hunan 412001 (CN)
(74) Representative: Ran, Handong
(86) International application number: PCT/CN2021/105677
(87) International publication number: WO 2022/062579

(57) **Abstract**

Provided are a train traction cutting-out and control system and method in the case of emergency braking. When emergency braking is applied, coils of a first relay (K1) and a second relay (K2) are simultaneously powered off. An auxiliary contact of the first relay (K1) is opened, a traction pulse of a traction converter is blocked, and an output of a traction force of the traction converter is cut off, so that a traction cutting-out function is achieved, wherein the safety level of the traction cutting-out function is SIL2; in addition, an auxiliary contact of the second relay (K2) is opened, a coil of a contactor module is powered off, a main contact of the contactor module is opened, an input power source of a main circuit of the traction converter is opened, and an output of a traction force of the traction converter is cut off, so that a traction cutting-out function is achieved, wherein the safety level of the traction cutting-out function is SIL1. The traction cutting-out function of which the safety level is SIL2 and the traction cutting-out function of which the safety level is SIL1 are simultaneously achieved, so that the entire train achieves the safety requirements of the traction cutting-out level SIL3 in the case of emergency braking.

## Description

### FIELD OF THE INVENTION

The present invention belongs to the technical field of train control, in particular to a train traction cutting-out control system and method in the case of emergency braking.

### BACKGROUND OF THE INVENTION

In the field of rail transit, some rail engineering vehicles and shunting trains employ a catenary (or a third rail) and an energy storage device, which achieve power supply by dual energy sources; and some shunting trains can be powered by an internal combustion power pack, which achieve power supply by three kinds of energy sources. With the development of rail transit industry, new requirements are put forward for the design safety of rail transit vehicles: traction cutting-out (in the case of emergency braking) shall meet the requirements of a safety level SIL3, while the existing design modes cannot meet the requirements of the safety level SIL3 in the case of emergency braking.

Note: SIL is an abbreviation of Safety Integrity Level, including SIL1, SIL2, SIL3, and SIL4. The SIL is calculated from I=S*W*E/V.

Herein, I represents a classification indicator, S represents a definition of injury, W represents a definition of occurrence probability, and E represents a definition of exposure time. Details are shown in the German railway standards SIRF-400. If the classification indicator is higher, the safety design level is higher.

General technical parameters of rail engineering vehicles and shunting trains are as follows:
The catenary is generally a catenary/third rail, and its voltage is suitable for DC1500V, DC750V, etc.; the energy storage device is generally a traction battery, a supercapacitor, etc.; and the depot power source is suitable for 3AC380V, 3AC400V, 3AC440V, etc.

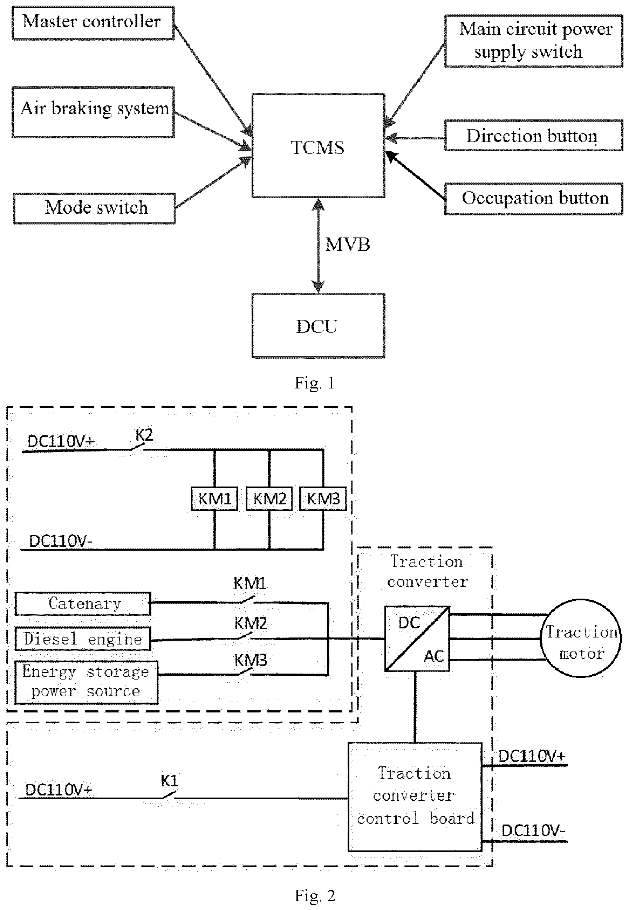

At present, a Train Control and Management System (TCMS) monitors the states of a traction braking controller, a train mode switch, a train main circuit power supply switch, a direction button, an occupation button, etc., to send traction control instructions and cutting-out instructions to a Drive Control Unit (DCU) by means of a Multifunction Vehicle Bus (MVB), as shown in FIG. 1, and the DCU executes traction control and cutting-out. The DCU receives a traction control instruction or a traction cutting-out instruction from the TCMS by means of the MVB, and the DCU executes traction control or traction cutting-out. This traction cutting-out mode in which data is transmitted according to a communication protocol cannot meet the requirements of a safety level SIL3.

### SUMMARY OF THE INVENTION

The objective of the present invention is to provide a train traction cutting-out control system and method in the case of emergency braking, so as to solve the problem that the existing traction cutting-out mode in the case of emergency braking cannot meet the requirements of a safety level SIL3.

The present invention solves the above technical problem by the following technical solution: a train traction cutting-out control system in the case of emergency braking includes a traction converter, a traction motor and a power source, wherein

The system further includes a first relay, a second relay, a contactor module and a traction converter control board; a first end of an auxiliary contact of the first relay is connected to a control power source of a train by a hard wire, a second end of the auxiliary contact of the first relay is connected to an input end of the traction converter control board by a hard wire, and an output end of the traction converter control board is connected to a control end of a power device of the traction converter by a hard wire; a first end of an auxiliary contact of the second relay is connected to the control power source of the train by a hard wire, and a second end of the auxiliary contact of the second relay is connected to a coil of the contactor module by a hard wire; a first end of a main contact of the contactor module is connected to the power source by a hard wire, and a second end of the main contact of the contactor module is connected to a power end of the traction converter by a hard wire; and an emergency braking circuit simultaneously controls coils of the first relay and the second relay to be powered on and off.

In the present invention, a pulse of the traction converter is blocked and its input power source is cut off by hard wire control, so as to achieve a traction cutting-out function and improve the safety level, specifically: the emergency braking circuit simultaneously controls the coils of the first relay and the second relay to be powered on and powered off; when emergency braking is applied, the coils of the first relay and the second relay are simultaneously powered off; on the one hand, the auxiliary contact of the first relay is opened, the traction pulse of the traction converter is blocked, and an output of a traction force of the traction converter is cut off, so that a traction cutting-out function is achieved, wherein the safety level of the traction cutting-out function is SIL2; on the other hand, the auxiliary contact of the second relay is opened, the coil of the contactor module is powered off, the main contact of the contactor module is opened, the input power source of the main circuit of the traction converter is opened, and the output of the traction force of the traction converter is cut off, so that a traction cutting-out function is achieved, wherein the safety level of the traction cutting-out function is SIL1; the coil of the first relay and the coil of the second relay are simultaneously powered off, so that one traction cutting-out function which satisfies the safety level SIL2 and another traction cutting-out function which satisfies the safety level SIL1 are simultaneously achieved, thus the entire train achieves the traction cutting-out function which satisfies the safety requirements of level SIL3 in the case of emergency braking.

Further, the power source includes a catenary, a diesel engine and an energy storage power source, and the contactor module includes a first contactor, a second contactor and a third contactor; coils of the first contactor, the second contactor and the third contactor are all connected to the second end of the auxiliary contact of the second relay; second ends of main contacts of the first contactor, the second contactor and the third contactor are all connected to the power end of the traction converter; and a first end of the main contact of the first contactor is connected to the catenary, a first end of the main contact of the second contactor is connected to the diesel engine, and a first end of the main contact of the third contactor is connected to the energy storage power source.

The traction converter is powered by the catenary (or a third rail), the diesel engine (an internal combustion power pack) and the energy storage power source. The number of contactors is the same as the number of power sources, and each contactor controls the on-off of one power source, thus achieving the purpose of controlling the on-off of the input power source of the traction converter.

Further, the energy storage power source is a storage battery pack or a supercapacitor bank.

Further, the emergency braking circuit is formed by series connection of an emergency braking button, a TCMS system, a train air braking system, a signal system, an unattended alert system, as well as a branch composed of the coil of the first relay and the coil of the second relay which are connected in parallel.

In the case of non-emergency braking, the emergency braking circuit is closed, the coil of the first relay and the coil of the second relay are powered on, the traction converter is powered by the power source, and the power device of the traction converter is controlled on and off by the traction converter control board. In the case of emergency braking, the emergency braking circuit is open, the coil of the first relay and the coil of the second relay are powered off, the pulse of the traction converter is blocked and its input power source is cut off, so that a traction cutting-out function which satisfies the safety level SIL3. The emergency braking is controlled by the emergency braking button, the TCMS system, the train air braking system, the signal system and the unattended alert system. If any of these apparatuses is triggered, the emergency braking is applied to the train. The number of apparatus which can trigger the emergency braking may be increased or decreased according to actual needs.

Further, the first relay and the second relay are two independent relays; or the first relay and the second relay are the same relay, and different auxiliary contacts of the relay control the input of the traction converter control board and the coil of the contactor module respectively.

The first relay and the second relay may be two independent relays, and the coil of the first relay and the coil of the second relay are independent of each other; the first relay and the second relay may also be the same relay, the coil of the relay replaces not only the coil of the first relay but also the coil of the second relay, and two auxiliary contacts of the relay replace the auxiliary contact of the first relay and the auxiliary contact of the second relay respectively, that is, one coil controls two auxiliary contacts simultaneously.

The present invention further provides a train traction cutting-out control method in the case of emergency braking, which uses the above-mentioned train traction cutting-out control system in the case of emergency braking, and includes the following steps:
During emergency braking, switching off the coil of the first relay and the coil of the second relay simultaneously, making the auxiliary contact of the first relay and the auxiliary contact of the second relay simultaneously opened, and, by the opening of the auxiliary contact of the first relay, blocking the pulse of the traction converter and cutting off the output of the traction force of the traction converter, so that a traction cutting-out function which satisfies the safety level SIL2 is achieved; and, by the opening of the auxiliary contact of the second relay, making the main contact of the contactor module to be opened, cutting off the power source of the traction converter, and cutting off the output of the traction force of the traction converter, so that a traction cutting-out function which satisfies the safety level SIL1 is achieved.

Further, the emergency braking can be triggered by at least any of the following means: an emergency braking button, a TCMS system, a train air braking system, a signal system and an unattended alert system.

### Beneficial effects are as follows:

Compared with the prior art, in the train traction cutting-out control system and method in the case of emergency braking provided by the present invention, the pulse of the traction converter is blocked and its input power source is cut off by hard wire control, so as to achieve a traction cutting-out function which satisfies a safety level SIL3 and improve the safety level of traction cutting-out in the case of emergency braking.

### BRIEF DESCRIPTION OF THE DRAWINGS

In order to illustrate the technical solutions of the present invention more clearly, the following briefly introduces the accompanying drawings used in the description of the embodiments. Obviously, the drawings in the following description are only an embodiment of the present invention, and those of ordinary skill in the art can obtain other drawings according to the drawings without any creative effort.
FIG. 1 is a schematic diagram of traction cutting-out by MVB in the background of the present invention;
FIG. 2 is a schematic diagram of a train traction cutting-out control system in the case of emergency braking in an embodiment of the present invention;
FIG. 3 is a schematic diagram of an emergency braking circuit in an embodiment of the present invention, where S1 and S2 are emergency braking buttons, and Z1 and Z2 are train air braking systems; and
FIG. 4 is a flowchart of a train traction cutting-out control method in the case of emergency braking in an embodiment of the present invention.

### DETAILED DESCRIPTION OF THE EMBODIMENTS

A clear and complete description will be made to the technical solutions in the present invention below with reference to the accompanying drawings in the embodiments of the present invention. Apparently, the embodiments described are only part of the embodiments of the present invention, not all of them. All other embodiments obtained by those of ordinary skill in the art based on the embodiments of the present invention without any creative effort shall fall within the protection scope of the present invention.

As shown in FIG. 2, a train traction cutting-out control system in the case of emergency braking, provided by this embodiment, includes a traction converter, a traction motor, a power source, a first relay K1, a second relay K2, a contactor module and a traction converter control board; a first end of an auxiliary contact of the first relay K1 is connected to a control power source of a train by a hard wire, a second end of the auxiliary contact of the first relay K1 is connected to an input end of the traction converter control board by a hard wire, and an output end of the traction converter control board is connected to a control end of a power device of the traction converter by a hard wire; a first end of an auxiliary contact of the second relay K2 is connected to the control power source of the train by a hard wire, and a second end of the auxiliary contact of the second relay K2 is connected to a coil of the contactor module by a hard wire; a first end of a main contact of the contactor module is connected to the power source by a hard wire, and a second end of the main contact of the contactor module is connected to a power end of the traction converter by a hard wire; and an emergency braking circuit simultaneously controls coils of the first relay K1 and the second relay K2 to be powered on and off.

A train traction cutting-out function is achieved by two ways. One way is as follows: applying emergency braking → the coil of the first relay K1 is powered off → the auxiliary contact of the first relay K1 is opened → a pulse of the traction converter is blocked → an output of a traction force of the traction converter is cut off → realizing a traction cutting-out function which satisfies the safety level SIL2. The other way is as follows: applying emergency braking → the coil of the second relay K2 is powered off → the auxiliary contact of the second relay K2 is opened → coils of contactors are powered off → main contacts of the contactors are opened → an input power source of the traction converter is cut off → an output of a traction force of the traction converter is cut off → realizing a traction cutting-out function which satisfies the safety level SIL1. The two ways which are simultaneously achieved enable the entire train to satisfy a traction cutting-out function which satisfies a safety level SIL3.

The power source includes a catenary, a diesel engine and an energy storage power source, and the contactor module includes a first contactor KM1, a second contactor KM2 and a third contactor KM3; coils of the first contactor KM1, the second contactor KM2 and the third contactor KM3 are all connected to the second end of the auxiliary contact of the second relay K2; second ends of the main contacts of the first contactor KM1, the second contactor KM2 and the third contactor KM3 are all connected to the power end of the traction converter; and a first end of the main contact of the first contactor KM1 is connected to the catenary, a first end of the main contact of the second contactor KM2 is connected to the diesel engine, and a first end of the main contact of the third contactor KM3 is connected to the energy storage power source. The traction converter is powered by the catenary (or a third rail), the diesel engine (an internal combustion power pack) and the energy storage power source. The number of contactors is the same as the number of power sources, and each contactor controls the on-off of one power source, thus achieving the purpose of controlling the on-off of the input power source of the traction converter.

In this embodiment, the energy storage power source is a storage battery pack or a supercapacitor bank, and the third rail power source is DC750V

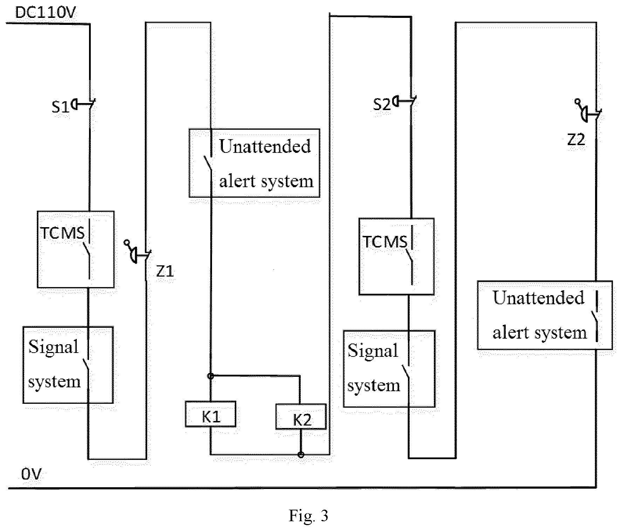

As shown in FIG. 3, the emergency braking circuit is formed by series connection of emergency braking buttons S1/S2, a TCMS system, train air braking systems Z1/Z2, signal systems, unattended systems, as well as a branch composed of the coil of the first relay K1 and the coil of the second relay K2 which are connected in parallel.

The emergency braking circuit employs the principle that emergency braking is triggered by power-off of the coils, which is realized by controlling the two intermediate relays K1 and K2. In the case of non-emergency braking, the emergency braking circuit is closed, the coil of the first relay K1 and the coil of the second relay K2 are powered on, the traction converter is powered by the power source, and the power device of the traction converter is controlled on and off by the traction converter control board. In the case of emergency braking, the emergency braking circuit is open, the coil of the first relay K1 and the coil of the second relay K2 are powered off, the pulse of the traction converter is blocked and its input power source is cut off, so that a traction cutting-out function which satisfies the safety level SIL3 is achieved. The emergency braking is controlled by the emergency braking button, the TCMS system, the train air braking system, the signal system and the unattended alert system. If any of these apparatuses is triggered, the emergency braking is applied to the train. The number of systems which can trigger the emergency braking may be increased or decreased according to actual needs.

In this embodiment, the first relay and the second relay are two independent relays, and the coil of the first relay and the coil of the second relay are independent of each other.

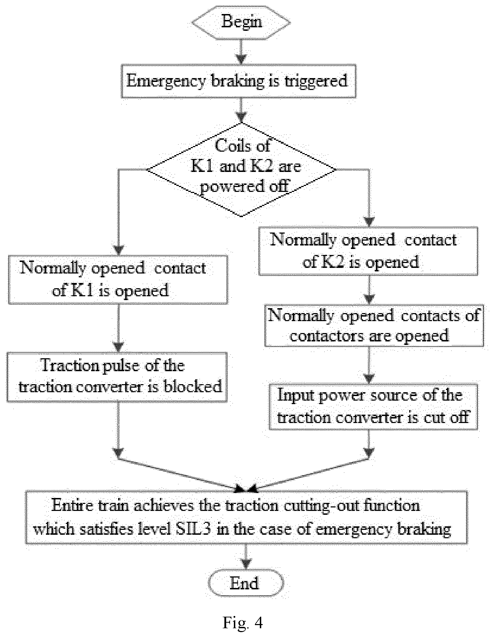

As shown in FIG. 4, this embodiment further provides a train traction cutting-out control method in the case of emergency braking, which uses the above-mentioned train traction cutting-out control system in the case of emergency braking, and includes the following steps:
During emergency braking, switching off the coil of the first relay K1 and the coil of the second relay K2 simultaneously , making the auxiliary contact of the first relay K1 and the auxiliary contact of the second relay K2 simultaneously opened, and, by the opening of the auxiliary contact of the first relay K1, blocking the pulse of the traction converter and cutting off the output of the traction force of the traction converter, so that a traction cutting-out function which satisfies the safety level SIL2 is achieved; and, by the opening of the auxiliary contact of the second relay K2, making the main contact of the contactor module to be opened, cutting off the power source of the traction converter, and cuttings off the output of the traction force of the traction converter, so that a traction cutting-out function which satisfies the safety level SIL1 is achieved.

The emergency braking can be triggered by emergency braking buttons S1/S2, the TCMS system, train air braking systems Z1/Z2, signal systems or unattended alert systems.

Described above are the specific embodiments of the present invention only, but the protection scope of the present invention is not limited thereto. Any skilled person who is familiar with this art could readily conceive of variations or modifications within the disclosed technical scope of the present invention, and these variations or modifications shall fall within the protection scope of the present invention.

## Claims

1. A train traction cutting-out control system in the event of emergency braking, comprising a traction converter, a traction motor and a power source, wherein:
the train traction cutting-out control system further comprises a first relay, a second relay, a contactor module and a traction converter control board;
a first end of an auxiliary contact of the first relay is connected to a control power source of a train by a hard wire, a second end of the auxiliary contact of the first relay is connected to an input end of the traction converter control board by a hard wire, and an output end of the traction converter control board is connected to a control end of a power device of the traction converter by a hard wire;
a first end of an auxiliary contact of the second relay is connected to the control power source of the train by a hard wire, and a second end of the auxiliary contact of the second relay is connected to a coil of the contactor module by a hard wire;
a first end of a main contact of the contactor module is connected to the power source by a hard wire, and a second end of the main contact of the contactor module is connected to a power end of the traction converter by a hard wire; and
an emergency braking circuit simultaneously controls coils of the first relay and the second relay to be powered on and off.

2. The train traction cutting-out control system according to claim 1, wherein:
the power source comprises a catenary, a diesel engine and an energy storage power source, and the contactor module comprises a first contactor, a second contactor and a third contactor;
coils of the first contactor, the second contactor and the third contactor are all connected to the second end of the auxiliary contact of the second relay;
second ends of main contacts of the first contactor, the second contactor and the third contactor are all connected to a power end of the traction converter; and
a first end of the main contact of the first contactor is connected to the catenary, a first end of the main contact of the second contactor is connected to the diesel engine, and a first end of the main contact of the third contactor is connected to the energy storage power source.

3. The train traction cutting-out control system according to claim 2, wherein the energy storage power source is a storage battery pack or a supercapacitor bank.

4. The train traction cutting-out control system according to claim 1, wherein the emergency braking circuit is formed by series connection of an emergency braking button, a TCMS system, a train air braking system, a signal system, an unattended alert system, as well as a branch composed of the coil of the first relay and the coil of the second relay which are connected in parallel.

5. The train traction cutting-out control system according to any one of claims 1 to 4, wherein:
the first relay and the second relay are two independent relays; or
the first relay and the second relay are the same relay, and different auxiliary contacts of the relay control the input of the traction converter control board and the coil of the contactor module respectively.

6. A train traction cutting-out control method in the event of emergency braking, using the train traction cutting-out control system according to any one of claims 1-5, the method comprising:
during emergency braking, switching off the coil of the first relay and the coil of the second relay simultaneously, opening the auxiliary contact of the first relay and the auxiliary contact of the second relay simultaneously, blocking a pulse of the traction converter, and cutting off an output of the traction converter; and
opening the main contact of the contactor module, cutting off the power source of the traction converter, and cutting off the output of the traction converter.

7. The train traction cutting-out control method according to claim 6, comprising triggering the emergency braking by at least any of the following means:
an emergency braking button, a TCMS system, a train air braking system, a signal system and an unattended alert system.
